# EUROPÄISCHE PATENTANMELDUNG

(11) **EP 3 162 634 A1**
(43) Veröffentlichungstag der Anmeldung: **03.05.2017**
(21) Anmeldenummer: 16192981.5
(22) Anmeldetag: 10.10.2016
(51) Int. Cl.: B60Q 1/14, B60Q 11/00, B60R 16/03

(54) **STEUERGERÄT ZUR STEUERUNG ODER REGELUNG MINDESTENS EINER BELEUCHTUNGSEINRICHTUNG UND KRAFTFAHRZEUG MIT EINEM SOLCHEN STEUERGERÄT**

(30) Priorität: 29.10.2015 DE 102015221127
(71) Anmelder: Automotive Lighting Reutlingen GmbH, 72762 Reutlingen (DE)
(72) Erfinder: Zimmermann, Christian, 72108 Rottenburg (DE)
(74) Vertreter: DREISS Patentanwälte PartG mbB

(57) **Zusammenfassung**

Die Erfindung betrifft ein Steuergerät (2) zur Steuerung oder Regelung mindestens einer Beleuchtungseinrichtung (11, 12; 21, 22) eines Kraftfahrzeugs. Das Steuergerät (2) umfasst eine erste Kommunikationsschnittstelle (3) zu einem Datenbus (15, 25) des Kraftfahrzeugs, mindestens eine zweite Kommunikationsschnittstelle (4; 5) zu der mindestens eine Beleuchtungseinrichtung (11, 12; 21, 22), und ein Rechengerät (6) zur Abarbeitung eines Computerprogramms, dass zur Realisierung der Steuerung oder Regelung programmiert ist, wenn es auf dem Rechengerät (6) abläuft. Zur Vereinfachung der Systemarchitektur wird vorgeschlagen, dass das Steuergerät (2) zur Steuerung oder Regelung sowohl von mindestens einem Scheinwerfer (11; 12) als auch von mindestens einer Rückleuchte (21; 22) ausgebildet ist.

## Beschreibung

Die vorliegende Erfindung betrifft ein Steuergerät zur Steuerung oder Regelung mindestens einer Beleuchtungseinrichtung eines Kraftfahrzeugs. Das Steuergerät umfasst eine erste Kommunikationsschnittstelle zu einem Datenbus des Kraftfahrzeugs, mindestens eine zweite Kommunikationsschnittstelle zu der mindestens einen Beleuchtungseinrichtung, und ein Rechengerät zur Abarbeitung eines Computerprogramms. Das Computerprogramm ist zur Realisierung der Steuerung oder Regelung programmiert, wenn es auf dem Rechengerät abläuft. Außerdem betrifft die Erfindung ein Kraftfahrzeug mit mindestens einer Beleuchtungseinrichtung und mindestens einem Steuergerät der oben beschriebenen Art zur Steuerung oder Regelung der mindestens einen Beleuchtungseinrichtung.

Aus dem Stand der Technik sind seit Langem Kraftfahrzeuge bekannt, die in ihrem Frontbereich Scheinwerfer zum Ausleuchten der Fahrbahn vor dem Kraftfahrzeug und in ihrem Heckbereich Rücklichter zum Signalisieren bestimmter Fahrsituationen (zum Beispiel zur Realisierung von Rücklicht, Blinklicht, Bremslicht) umfassen. Seit einigen Jahren sind so genannte Adaptive Frontlighting Systems (AFS)-Scheinwerfer bekannt, durch die der Fahrbahnbereich vor dem Kraftfahrzeug dynamisch und fahrsituationsabhängig, das heißt abhängig von Umgebungsbedingungen und/oder einer Fahrsituation des Kraftfahrzeugs, ausgeleuchtet werden kann. Dies kann beispielsweise durch eine statische oder dynamische Kurvenlichtfunktion, durch eine Leuchtweitenregulierung, durch eine Variation der Lichtverteilung von Stadtlicht, Landstraßenlicht und Autobahnlicht, durch eine Variation der Höhe einer Helldunkelgrenze einer abgeblendeten Lichtverteilung, durch ein so genanntes Teil-Fernlicht, bei dem andere Verkehrsteilnehmer vor dem Kraftfahrzeug detektiert werden und der entsprechende Bereich der Fernlichtverteilung abgeschattet wird, oder durch Markerlicht, bei dem Objekte vor dem Kraftfahrzeug detektiert und durch einen schmalen, spotartigen Lichtstrahl gezielt angestrahlt werden.

Solche AFS-Scheinwerfer benötigen ein Steuergerät, um die Scheinwerfer bzw. deren Komponenten abhängig von den Umgebungsbedingungen und/oder der Fahrsituation ansteuern und die entsprechende dynamische Lichtverteilung generieren zu können. Die bekannten AFS-Steuergeräte weisen eine erste Kommunikationsschnittstelle zu einem Datenbus des Kraftfahrzeugs auf. Über den Datenbus werden Informationen über das Umfeld des Kraftfahrzeugs und/oder aktuelle Fahrzeugsituationen übertragen. Diese Informationen können über die erste Kommunikationsschnittstelle von dem AFS-Steuergerät abgegriffen und verarbeitet werden, um entsprechende Ansteuersignale für die Scheinwerfer bzw. deren Komponenten (insbesondere Aktoren oder Steller des Scheinwerfers) zu generieren. Ferner verfügt das AFS-Steuergerät über mindestens eine zweite Kommunikationsschnittstelle, über die das Steuergerät mit den Scheinwerfern in Verbindung steht. Über diese Verbindung werden die von dem AFS-Steuergerät generierten Ansteuersignale an die Scheinwerfer bzw. deren Komponenten übertragen, wo sie entsprechende Aktoren des Scheinwerfers ansteuern, um die gewünschte Lichtverteilung des AFS-Scheinwerfers zu erzeugen. Die Steuerungs- bzw. Regelungsfunktion des Steuergeräts wird vorzugsweise durch ein Computerprogramm realisiert, das auf einem Prozessor des Steuergeräts abläuft. Das AFS-Steuergerät ist in der Regel im Motorraum, vorzugsweise in der Nähe der Scheinwerfer, oder an einer beliebigen anderen Stelle im Fahrzeug-Innenraum angeordnet.

Bei AFS-Scheinwerfern werden mittels intelligenter Aktorik und einem intelligenten Master-Steuergerät unterschiedliche Lichtverteilungen abhängig von der Fahrsituation und/oder Umgebungsbedingungen des Kraftfahrzeugs realisiert. Dazu wertet das Master-Steuergerät verschiedene Informationen aus, die es über den Datenbus des Kraftfahrzeugs erhält. Diese Informationen betreffen beispielsweise Informationen über die Umgebungshelligkeit (Tag-/Nacht Informationen), einen Lenkwinkel, eine Fahrzeuggeschwindigkeit, eine Fahrzeugverzögerung und/oder Kamera-, Radar- und/oder Ultraschallinformationen zum Umfeld des Kraftfahrzeugs. Daraus werden in dem Master-Steuergerät die entsprechenden Ansteuersignale für die Scheinwerfer generiert, um für die jeweilige Fahrsituation und/oder die jeweiligen Umgebungsbedingungen eine optimale Ausleuchtung der Fahrbahn zu realisieren.

Seit Kurzem sind auch adaptive Fahrzeugrückleuchten (Adaptive Rearlighting System (ARS)) bekannt. Mit ARS-Rückleuchten kann beispielsweise die Intensität des Rücklichts an die Umgebungshelligkeit angepasst werden, die Signalisierung eines Bremsvorgangs mittels des Bremslichts abhängig von der Stärke der Verzögerung durch die Intensität des Bremslichts variiert werden, oder in bestimmten Fahrzeugsituationen und/oder bei bestimmten Umgebungsbedingungen ein besonders auffälliges Bremslicht und/oder Rücklicht erzeugt werden, oder ein wischender Blinker realisiert werden. Auch die ARS-Rückleuchten benötigen ein spezielles Steuergerät zur Realisierung der ARS-Funktionen der Rückleuchten. Derzeit verfügen ARS-Rückleuchten über ein separates Steuergerät, das unabhängig von dem AFS-Steuergerät ist. Das ARS-Steuergerät ist üblicherweise im Heckbereich des Kraftfahrzeugs, vorzugsweise in der Nähe der Rückleuchten angeordnet.

Ein Grund dafür, dass AFS-Scheinwerfer und ARS-Rückleuchten unterschiedliche, separate Steuergeräte aufweisen, liegt in der zeitlich versetzten Einführung dieser Systeme im Kraftfahrzeug. Zunächst gab es in Kraftfahrzeugen lediglich AFS-Scheinwerfer mit dem entsprechenden AFS-Steuergerät. Erst einige Zeit später wurden in Kraftfahrzeugen zusätzlich zu den bestehenden AFS-Scheinwerfern auch ARS-Rückleuchten mit den entsprechenden ARS-Steuergeräten eingeführt. Ein weiterer Grund ist darin zu sehen, dass Scheinwerfer und Rückleuchten manchmal zwar von dem gleichen Zulieferer, in aller Regel jedoch von unterschiedlichen Abteilungen geplant und realisiert werden. Bei den AFS-Scheinwerfern und den ARS-Rückleuchten handelt es sich also um völlig separate Systeme, die getrennt voneinander entwickelt und eingeführt wurden. Schließlich beruhen AFS-Scheinwerfer und ARS-Rückleuchten auf unterschiedlichen Elektrik/Elektronik (E/E)-Architekturen, so dass es derzeit nicht ohne weiteres möglich wäre, die Funktionen des AFS-Steuergeräts und des ARS-Steuergeräts in einem einzigen gemeinsamen Steuergerät zusammenzuführen.

Ausgehend von dem beschriebenen Stand der Technik liegt der vorliegenden Erfindung die Aufgabe zu Grunde, die oben beschriebenen Einschränkungen aufzuheben und dadurch für eine Vereinfachung der Systemarchitektur für die Kraftfahrzeugbeleuchtung einhergehend mit einer Kostensenkung zu sorgen.

Zur Lösung dieser Aufgabe wird ausgehend von dem Steuergerät der eingangsgenannten Art vorgeschlagen, dass das Steuergerät zur Steuerung oder Regelung sowohl von mindestens einem Scheinwerfer als auch von mindestens einer Rückleuchte ausgebildet ist.

Da hochwertige Scheinwerfer (zum Beispiel Scheinwerfer mit Gasentladungslampe oder LED-Scheinwerfer, mit oder ohne AFS-Funktionalität) und hochwertige Rückleuchten (Voll-LED, mit oder ohne ARS-Funktionalität) von den Fahrzeugherstellern meist im Rahmen eines gemeinsamen Ausstattungspaketes dem Endkunden angeboten werden, kann davon ausgegangen werden, dass eine bestimmte Infrastruktur zur Umsetzung adaptiver Kraftfahrzeugbeleuchtungseinrichtungen bereits in einem System (AFS oder ARS) vorhanden ist und von dem anderen System (ARS oder AFS) mitbenutzt werden kann.

Die vorliegende Erfindung beschreibt also erstmals ein kombiniertes AFS/ARS-System, das von einem gemeinsamen Steuergerät gesteuert wird. Dabei werden bewusst bestimmte Nachteile in Kauf genommen, wie beispielsweise ein erhöhter Aufwand und erhöhte Kosten für die Verkabelung und das Erfordernis der Schaffung einer gemeinsamen E/E-Architektur sowohl für die AFS-Scheinwerfer als auch für die ARS-Rückleuchten, um dadurch die Vorteile der vorliegenden Erfindung zu erreichen. Mit der vorliegenden Erfindung lässt sich eines der zwei benötigten Steuergeräte (Controller-ECUs) einsparen, was zu entsprechenden Synergien bei Kosten, Bauraum, E/E-Architektur, Verkabelung, Komplexität des Gesamtsystems und anderem führt. Bei entsprechender Auslegung werden sich die Kosten für das erfindungsgemäße zentrale Steuergerät gegenüber einem herkömmlichen AFS- oder ARS-Steuergerät nur geringfügig erhöhen, da der Mehraufwand zur Realisierung der zusätzlichen ARS- oder AFS-Funktionen in der Hauptsache nur eine geänderte Software beinhaltet. Ferner lässt sich durch das gemeinsame Steuergerät auch auf besonders einfache Weise eine zentrale Diagnose der kompletten Kraftfahrzeug-Außenbeleuchtung umsetzen. Gegebenenfalls lassen sich auch Fail-Safe-Strategien, bspw. beim Ausfall einzelner Lichtquellen, des Kraftfahrzeug-Datenbus oder einzelner Sensoren zum Erfassen von Umgebungsbedingungen und/oder Fahrsituationen, für die Scheinwerfer und die Rückleuchten übergreifend realisieren.

Gemäß einer vorteilhaften Weiterbildung der vorliegenden Erfindung wird vorgeschlagen, dass das Steuergerät zur Steuerung oder Regelung sowohl von allen Scheinwerfern als auch von allen Rückleuchten des Kraftfahrzeugs ausgebildet ist. Die Vorteile der vorliegenden Erfindung kommen insbesondere zum Tragen, wenn sämtliche Scheinwerfer und Rückleuchten des Kraftfahrzeugs gemeinsam von einem zentralen Steuergerät angesteuert werden. Eventuell wäre es sogar denkbar, diesem Steuergerät auch noch die Steuerung oder Regelung von weiteren Leuchten des Kraftfahrzeugs, bspw. von Seitenleuchten (seitliche Positionsleuchten) oder von Nebelscheinwerfern, die in der Regel separat von den Hauptscheinwerfern im Frontbereich des Kraftfahrzeugs angeordnet sind, zuzuordnen.

Selbstverständlich kann die Erfindung mit jeglicher Art von Scheinwerfer und Rückleuchten realisiert werden, die über Steuergeräte verfügen. Dabei müssen die Steuergeräte nicht zur Realisierung einer AFS- oder ARS-Funktionalität ausgelegt sein, sondern können auch zur Steuerung oder Regelung anderer Funktionen des Scheinwerfer bzw. der Rückleuchte dienen. Dies können bspw. Scheinwerfer mit Gasentladungslampen, LED-Scheinwerfer oder Laser-Scheinwerfer sowie Voll-LED-Rückleuchten sein. All diese Beleuchtungseinrichtungen benötigen ein Steuergerät unabhängig davon, ob sie mit oder ohne AFS- bzw. ARS-Funktionalität sind. Gemäß einer vorteilhaften Ausführungsform der Erfindung wird jedoch vorgeschlagen, dass das zentrale Steuergerät zur Steuerung oder Regelung mindestens eines Scheinwerfers eines Adaptive Frontlighting Systems (AFS) und/oder mindestens einer Rückleuchte eines Adaptive Rearlighting Systems (ARS) ausgebildet ist.

Vorteilhafterweise umfasst die erste Kommunikationsschnittstelle eine CAN-, LIN-, PWM-, analoge oder bitcodierte Schnittstelle, über die eine Verbindung zu einem CAN-, LIN-, PWM-, analogen oder bitcodierten Datenbus hergestellt werden kann. Selbstverständlich ist diese Aufzählung nicht abschließend. Die erste Schnittstelle könnte auch eine Ethernet-Schnittstelle, eine FlexRay-Schnittstelle zu einem FlexRay-Datenbus oder jede andere geeignete Schnittstelle zu einem Fahrzeuginternen Datenbus sein. Dabei kann es sich auch um Datenbusse handeln, die in Zukunft noch entwickelt und Einsatz im Kraftfahrzeug finden werden. Dem entsprechend wird vorgeschlagen, dass die mindestens eine zweite Kommunikationsschnittstelle eine LIN- oder eine CAN-Schnittstelle umfasst, die über mindestens einen LIN- oder CAN-Datenbus die Verbindung zu dem mindestens einen Scheinwerfer und/oder der mindestens einen Rückleuchte herstellt. Auch diese Aufzählung ist nicht abschließend und die Verbindung von dem zentralen Steuergerät zu den Scheinwerfern und Rückleuchten kann auf jede beliebige geeignete Weise hergestellt werden, sofern diese Verbindung geeignet ist, die Ansteuersignale von dem Steuergerät an die Scheinwerfer bzw. die Rückleuchten zu übertragen und gegebenenfalls auch Rückmeldungen und/oder Statusinformationen von den Scheinwerfern bzw. den Rückleuchten an das Steuergerät zu übertragen. Auf diese Weise kann bspw. ein defekter Aktor oder eine defekte Lichtquelle an das zentrale Steuergerät gemeldet werden, das geeignete Maßnahmen ergreift, z.B. Eintrag in einem Fehlerspeicher, Ausgabe eines Warnhinweises an den Fahrer, Einleiten eines Notlaufbetriebs (Fail-Safe-Funktion) etc.

Es ist denkbar, dass die Scheinwerfer und die Rückleuchten des Kraftfahrzeugs über einen gemeinsamen Datenbus angesteuert werden. Dabei handelt es sich also um einen Datenbus, der zumindest die Scheinwerfer und die Rückleuchten miteinander verbindet und an den auch das zentrale Steuergerät angeschlossen ist. Vorzugsweise sind jedoch mehrere zweite Kommunikationsschnittstellen vorgesehen, welche die Verbindung zu den Scheinwerfern einerseits und zu den Rückleuchten andererseits über separate Datenbusse oder sonstige Verbindungen herstellen.

Gemäß einer weiteren vorteilhaften Weiterbildung der Erfindung wird vorgeschlagen, dass das Rechengerät einen Mikroprozessor umfasst. Der Mikroprozessor kann Teil eines Mikrocontrollers des Steuergeräts sein.

Die Aufgabe der vorliegenden Erfindung kann auch durch ein Kraftfahrzeug der eingangs genannten Art gelöst werden, wobei das Steuergerät zur Steuerung oder Regelung sowohl von mindestens einem Scheinwerfer des Kraftfahrzeugs als auch von mindestens einer Rückleuchte des Kraftfahrzeugs ausgebildet ist. Das Kraftfahrzeug verfügt also über ein erfindungsgemäßes zentrales Steuergerät zur Steuerung und/oder Regelung sowohl der Scheinwerfer als auch der Rückleuchten. Vorzugsweise verfügt das Kraftfahrzeug über AFS-Scheinwerfer und ARS-Rückleuchten.

Weitere Merkmale und Vorteile der Erfindung werden nachfolgend anhand der Figuren näher erläutert. Es zeigen:
- Fig. 1: eine aus dem Stand der Technik bekannte AFS-Scheinwerferanordnung;
- Fig. 2: eine aus dem Stand der Technik bekannte ARS-Rückleuchtenanordnung; und
- Fig. 3: eine Scheinwerfer-Rückleuchten-Anordnung mit einem erfindungsgemäßen zentralen Steuergerät.

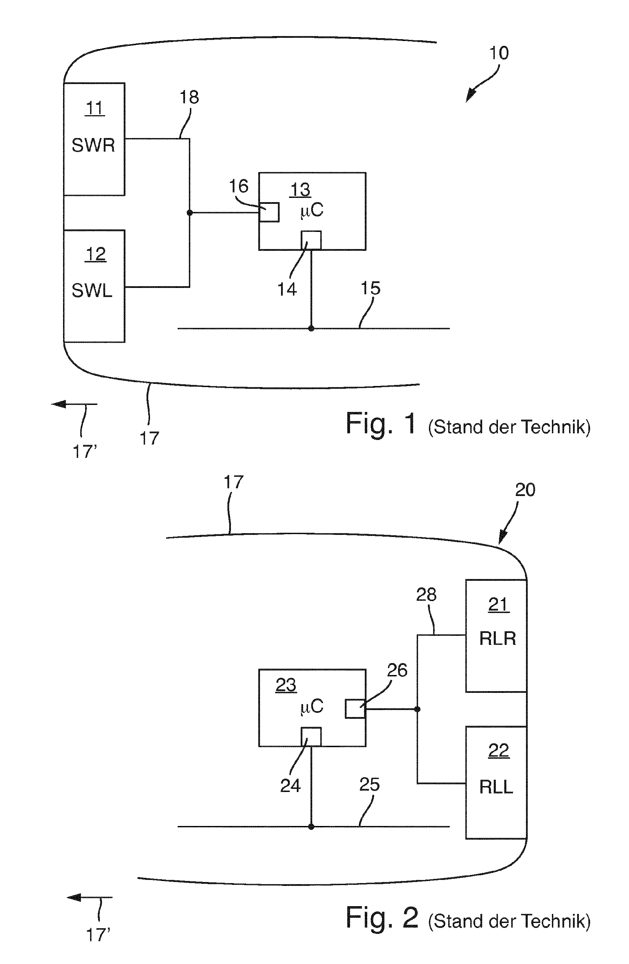

Die Figuren 1 und 2 zeigen Scheinwerfer- beziehungsweise Rückleuchtenanordnungen, wie sie aus dem Stand der Technik bekannt sind. In Figur 1 ist eine AFS-Scheinwerferanordnung in ihrer Gesamtheit mit dem Bezugszeichen 10 bezeichnet. Die AFS-Anordnung 10 umfasst zunächst zwei Scheinwerfer 11, 12 (SWR, SWL), die üblicherweise im Frontbereich eines Kraftfahrzeugs 17 rechts und links am Fahrzeug 17 befestigt sind, so dass sie ein Lichtbündel zur Ausleuchtung der Fahrbahn vor dem Kraftfahrzeug aussenden können. Eine Fahrtrichtung des Fahrzeugs 17 ist mit dem Bezugszeichen 17' bezeichnet. Ferner umfasst die Anordnung 10 ein AFS-Steuergerät 13, das beispielsweise einen Mikrocontroller mit einem Mikroprozessor umfasst. Das Steuergerät 13 ist in der Nähe der Scheinwerfer 11, 12 im vorderen Bereich des Fahrzeugs 17, bspw. im Motorraum, angeordnet. Es ist ferner denkbar, dass das Steuergerät 13 in oder an einem Scheinwerfer 11, 12 (oder einer Rückleuchte, vgl. Fig. 2) angeordnet ist. Das Steuergerät 13 verfügt über eine erste Kommunikationsschnittstelle 14, über die das Steuergerät 13 mit einem Datenbus 15 des Kraftfahrzeugs verbunden ist. Ferner verfügt das Steuergerät 13 über eine zweite Kommunikationsschnittstelle 16, über die das Steuergerät 13 mit den Scheinwerfern 11, 12 in Verbindung steht. Die Verbindung zu den Scheinwerfers 11, 12 ist mit dem Bezugszeichen 18 bezeichnet.

Die Scheinwerfer 11, 12 haben jeweils eine AFS-Funktionalität und sind zum Aussenden einer adaptiven Lichtverteilung ausgelegt. Das AFS-Steuergerät 13 empfängt über die Schnittstelle 14 von dem Datenbus 15 Informationen betreffend einen Fahrzustand des Kraftfahrzeugs 17 (z.B. Beschleunigen, Verzögern, Kurvenfahrt, Beladungszustand, etc.), eine Fahrsituation (z.B. Fahrt in der Stadt, auf einer Landstraße, auf einer Autobahn, drohende Gefahrensituation, etc.) oder Umgebungsbedingungen (z.B. Wetter, Fahrbahnbeschaffenheit, Verkehrsdichte, etc.). Die empfangenen Informationen werden von dem Steuergerät 13 verarbeitet und daraus geeignete Ansteuersignale für die Scheinwerfer 11, 12 generiert, so dass die Scheinwerfer 11, 12 bei Ansteuerung durch die generierten Ansteuersignale den Fahrbahnbereich vor dem Kraftfahrzeug 17 optimal ausleuchten. Die Ansteuersignale werden über die zweite Kommunikationsschnittstelle 16 und die Verbindung 18 an die Scheinwerfer 11, 12 übertragen und dort vorhandene Bauteile (Steuergerät, Lichtquellen, Aktoren, etc.) entsprechend angesteuert, um die optimale Ausleuchtung der Fahrbahn vor dem Kraftfahrzeug 17 in der gegebenen Fahrsituation und unter den gegebenen Umgebungsbedingungen zu realisieren.

In Figur 2 ist eine aus dem Stand der Technik bekannte ARS-Rückleuchtenanordnung in ihrer Gesamtheit mit dem Bezugszeichen 20 bezeichnet. Die ARS-Anordnung 20 umfasst zunächst einmal zwei Rückleuchten 21, 22 (RLR, RLL), die vorzugsweise rechts und links an der Rückseite des Kraftfahrzeugs 17 angeordnet sind. Ferner umfasst die Anordnung 20 ein ARS-Steuergerät 23, das die Steuerung und/oder Regelung der Rückleuchten 21, 22 übernimmt, damit diese die ARS-Funktionalität realisieren können. Das ARS-Steuergerät 23 verfügt über einen Mikrocontroller mit einem Mikroprozessor. Es hat eine erste Kommunikationsschnittstelle 24 zu einem Datenbus 25 des Kraftfahrzeugs. Ferner verfügt das Steuergerät 23 über eine zweite Kommunikationsschnittstelle 26, über die das Steuergerät 23 mit den Rückleuchten 21, 22 in Verbindung steht. Die Verbindung ist mit dem Bezugszeichen 28 bezeichnet. Die Ansteuerung der Rückleuchten 21, 22 erfolgt über die zweite Kommunikationsschnittstelle 26 und die Verbindung 28, welche die Schnittstelle 26 mit den Rückleuchten 21, 22 verbindet.

Bei dem Datenbus 15 aus Figur 1 und den Datenbus 25 aus Figur 2 kann es sich um den gleichen Datenbus des Kraftfahrzeugs handeln. Es ist aber auch denkbar, dass es sich um unterschiedliche Datenbusse handelt. Der Datenbus 15, 25 ist beispielsweise als ein CAN-, LIN-, PWM-, analoger oder bitcodierter Datenbus ausgebildet. Selbstverständlich kann der Datenbus 15, 25 auch als ein beliebig anderer Datenbus, beispielsweise ein Ethernet oder ein FlexRay-Bus, ausgebildet sein.

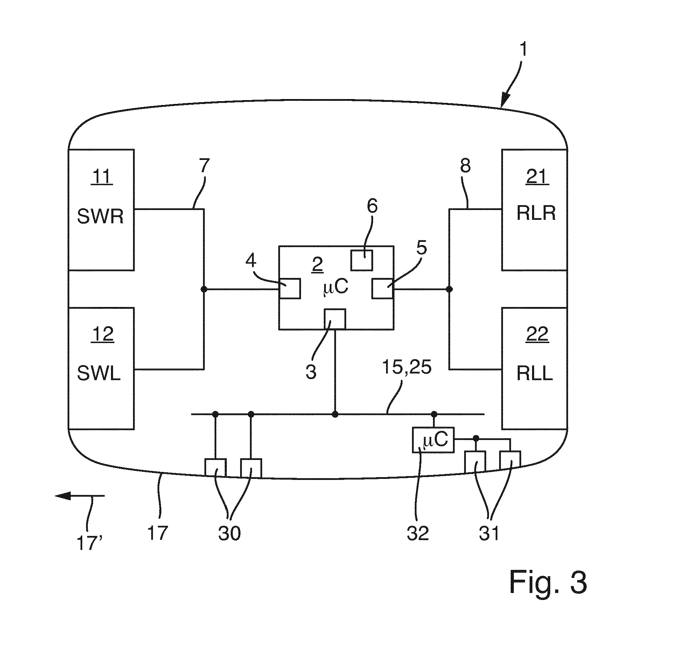

In Figur 3 ist eine Scheinwerfer-Rückleuchten-Anordnung 1 dargestellt, die über ein erfindungsgemäßes zentrales Steuergerät 2 verfügt, welches die Steuerung oder Regelung sowohl der Scheinwerfer 11, 12 als auch der Rückleuchten 21, 22 in dem Kraftfahrzeug 17 übernimmt. In dem dargestellten Ausführungsbeispiel verfügt das AFS/ARS-Steuergerät 2 über eine erste Kommunikationsschnittstelle, mit der das Steuergerät 2 mit einem Datenbus 15; 25 des Kraftfahrzeugs 17 in Verbindung steht. Selbstverständlich wäre es auch denkbar, dass das Steuergerät 2 über mehrere erste Kommunikationsschnittstellen 3 verfügt, die mit unterschiedlichen Datenbussen 15, 25 des Kraftfahrzeugs 17 in Verbindung stehen. Das AFS/ARS-Steuergerät 2 verfügt ferner über zwei zweite Kommunikationsschnittstellen 4, 5, über die das Steuergerät 2 einerseits mit den Scheinwerfern 11, 12 und andererseits mit den Rückleuchten 21, 22 in Verbindung steht.

Die Verbindungen von dem Steuergerät 2 zu den Scheinwerfern 11, 12 bzw. den Rückleuchten 21, 22 sind mit den Bezugszeichen 7, 8 bezeichnet. Selbstverständlich wäre es auch denkbar, dass das AFS/ARS-Steuergerät 2 lediglich über eine zweite Kommunikationsschnittstelle 4 oder 5 verfügt, über die das Steuergerät 2 über eine einzige Verbindung, bspw. in Form eines Datenbusses, sowohl mit den Scheinwerfern 11, 12 als auch mit den Rückleuchten 21, 22 in Verbindung steht. Die Verbindungen 7, 8 können beispielsweise als LIN-Bus oder als CAN-Bus ausgebildet sein. Selbstverständlich können die Verbindungen 7, 8 auch als ein beliebig andere Datenbusse eines Kraftfahrzeugs 17 ausgebildet sein.

Das AFS/ARS-Steuergerät 2 verfügt über ein Rechengerät 6, das zur Abarbeitung eines Computerprogramms ausgebildet ist, das zur Realisierung der Steuerung oder Regelung der Scheinwerfer 11, 12 und der Rückleuchten 21, 22 programmiert ist, wenn es auf dem Rechengerät 6 abläuft. Das Rechengerät 6 ist bspw. ein Mikroprozessor, der Teil eines Mikrocontrollers des Steuergeräts 2 sein kann.

Die Funktion des erfindungsgemäßen Steuergeräts 2 erfolgt folgendermaßen: Sensoren 30, 31, die an beliebigen Positionen in oder an dem Kraftfahrzeug 17 angeordnet sein können, erfassen Informationen betreffend einen Fahrzustand, eine Fahrsituation und/oder Umgebungsbedingungen des Kraftfahrzeugs 17. Diese Informationen werden auf den Datenbus 15; 25 gelegt, wo sie den übrigen Steuergeräten des Fahrzeugs 17, die an den Datenbus 15; 25 angeschlossen sind, zur Verfügung stehen. Das kann entweder dadurch erfolgen, dass die Sensoren 30 über geeignete Schnittstellen, die Teil der Sensoren 30 sein können, direkt an den Datenbus 15; 25 angeschlossen sind. Alternativ ist es auch denkbar, dass die Sensoren 31 mittelbar über einen Mikrocontroller 32 an den Datenbus 15; 25 angeschlossen sind. Der Mikrocontroller 32 kann die erfassten Informationen sammeln, eine Vorverarbeitung der Informationen vornehmen und/oder die Informationen in geeignete Datenpakete packen und diese dann in einem geeigneten Format auf den Datenbus 15; 25 geben.

Das Steuergerät 2 empfängt die Datenpakete mit den gewünschten Informationen vom Datenbus 15; 25, extrahiert die darin enthaltenen Informationen und verarbeitet diese im Rahmen der vorgesehenen Steuerungs- bzw. Regelungsfunktionalität. Die Steuerungs- oder Regelungsfunktionalität ist durch ein Computerprogramm realisiert, das auf dem Rechengerät 6 abläuft. Insbesondere erzeugt das Steuergerät 2 geeignete Ansteuersignale einerseits für die Scheinwerfer 11, 12 und andererseits für die Rückleuchten 21, 22, um deren adaptive Lichtfunktionen realisieren zu können. Die Ansteuersignale werden über die Schnittstellen 4, 5 und die Verbindungen 7, 8 an die Scheinwerfer 11, 12 und/oder die Rückleuchten 21, 22 übermittelt. Dort werden die Ansteuersignale bzw. die darin enthaltenen Ansteuerbefehle zur Ansteuerung von Komponenten der Scheinwerfer 11, 12 bzw. Rückleuchten 21, 22, bspw. in Form von Lichtquellen oder Aktoren, herangezogen, damit die Scheinwerfer 11, 12 bzw. die Rückleuchten 21, 22 die gewünschte, für die jeweilige Situation optimale adaptive Lichtfunktion erzeugen.

## Patentansprüche

1. Steuergerät (2) zur Steuerung oder Regelung mindestens einer Beleuchtungseinrichtung (11, 12; 21, 22) eines Kraftfahrzeugs, das Steuergerät (2) umfassend eine erste Kommunikationsschnittstelle (3) zu einem Datenbus (15, 25) des Kraftfahrzeugs, mindestens eine zweite Kommunikationsschnittstelle (4; 5) zu der mindestens einen Beleuchtungseinrichtung (11, 12; 21, 22), und ein Rechengerät (6) zur Abarbeitung eines Computerprogramms, das zur Realisierung der Steuerung oder Regelung programmiert ist, wenn es auf dem Rechengerät (6) abläuft, **dadurch gekennzeichnet, dass** das Steuergerät (2) zur Steuerung oder Regelung sowohl von mindestens einem Scheinwerfer (11; 12) als auch von mindestens einer Rückleuchte (21; 22) ausgebildet ist.

2. Steuergerät (2) nach Anspruch 1, **dadurch gekennzeichnet, dass** das Steuergerät (2) zur Steuerung oder Regelung sowohl von allen Scheinwerfern (11, 12) als auch von allen Rückleuchten (21, 22) des Kraftfahrzeugs ausgebildet ist.

3. Steuergerät (2) nach Anspruch 1 oder 2, **dadurch gekennzeichnet, dass** das Steuergerät (2) zur Steuerung oder Regelung mindestens eines Scheinwerfers (11; 12) eines Adaptive Frontlighting Systems, nachfolgend AFS, und/oder mindestens einer Rückleuchte (21; 22) eines Adaptive Rearlighting Systems, nachfolgend ARS, ausgebildet ist.

4. Steuergerät (2) nach einem der Ansprüche 1 bis 3, **dadurch gekennzeichnet, dass** die erste Kommunikationsschnittstelle (3) eine CAN-, LIN-, PWM-, analoge oder bitcodierte Schnittstelle umfasst, die eine Verbindung zu einem CAN-, LIN-, PWM-, analogen oder bitcodierten Datenbus (15; 25) herstellt.

5. Steuergerät (2) nach einem der Ansprüche 1 bis 4, **dadurch gekennzeichnet, dass** die mindestens eine zweite Kommunikationsschnittstelle (4; 5) eine LIN- oder eine CAN-Schnittstelle umfasst, die über mindestens einen LIN- oder CAN-Datenbus (7; 8) die Verbindung zu dem mindestens einen Scheinwerfer (11; 12) und/oder der mindestens einen Rückleuchte (21; 22) herstellt.

6. Steuergerät (2) nach Anspruch 5, **dadurch gekennzeichnet, dass** mehrere zweite Kommunikationsschnittstellen (4, 5) vorgesehen sind, welche die Verbindung zu den Scheinwerfern (11, 12) einerseits und zu den Rückleuchten (21, 22) andererseits über separate Datenbusse (7, 8) herstellen.

7. Steuergerät (2) nach einem der Ansprüche 1 bis 6, **dadurch gekennzeichnet, dass** das Rechengerät (6) einen Mikroprozessor umfasst.

8. Steuergerät (2) nach einem der Ansprüche 1 bis 6, **dadurch gekennzeichnet, dass** das Rechengerät (6) einen Mikrocontroller umfasst.

9. Kraftfahrzeug mit mindestens einer Beleuchtungseinrichtung (11, 12; 21, 22) und mindestens einem Steuergerät (2) zur Steuerung oder Regelung der mindestens einen Beleuchtungseinrichtung (11, 12; 21, 22), das Steuergerät (2) umfassend eine erste Kommunikationsschnittstelle (3) zu einem Datenbus (15; 25) des Kraftfahrzeugs, mindestens eine zweite Kommunikationsschnittstelle (4; 5) zu der mindestens einen Beleuchtungseinrichtung (11, 12; 21, 22), und ein Rechengerät (6) zur Abarbeitung eines Computerprogramms, das zur Realisierung der Steuerung oder Regelung programmiert ist, wenn es auf dem Rechengerät (6) abläuft, **dadurch gekennzeichnet, dass** das Steuergerät (2) zur Steuerung oder Regelung sowohl von mindestens einem Scheinwerfer (11; 12) des Kraftfahrzeugs als auch von mindestens einer Rückleuchte (21; 22) des Kraftfahrzeugs ausgebildet ist.

10. Kraftfahrzeug nach Anspruch 9, **dadurch gekennzeichnet, dass** das Steuergerät (2) nach einem der Ansprüche 2 bis 8 ausgebildet ist.
